# EUROPEAN PATENT SPECIFICATION

(11) **EP 1 722 190 B1**
(45) Date of publication and mention of the grant of the patent: **18.11.2009**
(21) Application number: 06113357.5
(22) Date of filing: 02.05.2006
(51) Int. Cl.: G01B 7/02

(54) **Method for measuring the length variation of a spring, and spring with associated sensor**
Verfahren zum Messen der Längenänderung einer Feder und Feder mit entsprechendem Sensor
Procédé de mesure de la variation de longueur d'un ressort et ressort possédant un capteur associé

(30) Priority: 12.05.2005 IT MO20050116
(43) Date of publication of application: 15.11.2006
(73) Proprietor: M.D. MICRO DETECTORS S.p.A., I-41100 Modena (IT)
(72) Inventor: Del Monte, Mauro, 41100 Modena (IT)
(74) Representative: Modiano, Micaela Nadia

(56) References cited:
- US-A1- 2004 092 349
- PATENT ABSTRACTS OF JAPAN vol. 009, no. 199 (P-380), 16 August 1985 (1985-08-16) -& JP 60 063444 A (SHARP KK), 11 April 1985 (1985-04-11)

## Description

The present invention relates to a method for measuring the length variation of a spring and to a spring with associated sensor.

More particularly, the invention relates to a method for measuring the elongation of the spring, said measurement being usable to monitor the vibrations of an object connected to said spring, to measure forces indirectly, or to calculate a position.

The invention also relates to a spring with the associated sensor which allows to perform the elongation measurement described above.

As it is known, there is a movement sensor of the inductive type which uses the LVDT principles, which consist of a primary coil and two secondary coils with a common movable magnetic core.

Sensors of the LVDT type are composed substantially of a fixed part and a movable part, both of which must be anchored to the two ends of the spring, or in any case to two separate points thereof; the measurement of the elongation is determined indirectly by the measurement of the relative position of the two parts of the sensor.

With a similar technique it is also possible to provide capacitive sensors.

Other sensors which can be used for the purpose are load cells, which measure the load to which the spring is subjected and allow to determine, starting from said measurement, the extent of the elongation.

In order to be able to measure the force applied by the spring, the cell must be connected between a fixed point and one end of the spring, or between the two ends of the spring.

These kinds of sensor are not free from drawbacks, including the fact that although they can be applied to the measurement of the elongation of a spring, they necessarily require the use of two anchoring points, at least one of which belongs to the body of the spring.

JP 60063444 and US2004/0092349 each disclose a method for measuring the length variation of a spring as defined in the pre-characterizing portion of the appended claim 1.

The aim of the present invention is to provide a device for measuring the length variation of a spring which allows to determine reliably the elongation or contraction of the spring with respect to a known static situation and does not have anchoring points which are external to said spring.

Within this aim, an object of the present invention is to provide a device for measuring the length variation of a spring in which the sensor element is connected directly to the spring at one of its ends or in any case to a single point thereof.

Another object of the present invention is to provide a device for measuring the length variation of a spring when stressed which allows to provide a precise measurement of the elongation or contraction of the spring.

Another object of the present invention is to provide a device for measuring the length variation of a spring in which the sensor can be provided simultaneously with the spring or applied at a later time to the spring.

Another object of the present invention is to provide a device for measuring the length variation of a spring and an associated sensor which are highly reliable, relatively simple to provide and at competitive costs.

In accordance with the present invention, there is provided a method for measuring the length variation of a spring, and a spring comprising a measurement device, as defined in the appended claims.

Further characteristics and advantages of the present invention will become better apparent from the following detailed description of a preferred but not exclusive embodiment of a method and a spring with a sensor according to the present invention, illustrated by way of non-limiting example in the accompanying drawings, wherein:
Figure 1 is a sectional view of a spring with a measurement device according to the present invention, shown in the inactive condition;
Figure 2 is a sectional view of a spring with a measurement device according to the present invention, shown in the traction condition;
Figure 3 is a view of the spring with a measurement device according to the invention, illustrating the means for fixing the device to the spring.

With reference to the figures, the reference numeral 1 designates a spring, with which a measurement device, generally designated by the reference numeral 2, for detecting variations of the length of the spring 1, is associated.

The spring 1 is made of a material whose magnetic permeability is significantly different from that of vacuum. Preferably, the spring 1 is made of ferromagnetic material.

In an inactive condition of the spring 1, the turns are compact, whereas in an expanded condition of the spring 1 the turns are mutually spaced.

The measurement of the variation of the length of the spring 1 performed by the measurement device 2 described hereinafter relates to the case in which the spring 1 works by traction, accordingly considering as the initial reference status for measurements the inactive condition of the spring 1; similar considerations can be made if the spring 1 works by compression.

The measurement device 2 is arranged inside the spring 1 and comprises a supporting element 3, at least one magnet 4 and at least one magnetic field sensor 5.

In particular, although the choice of the type of material for providing the supporting element 3 is not binding, it is preferably made of ferromagnetic material.

The magnet 4 can be constituted by a permanent magnet or, as an alternative, can comprise an electromagnet provided by means of a solenoid driven by way of a current source.

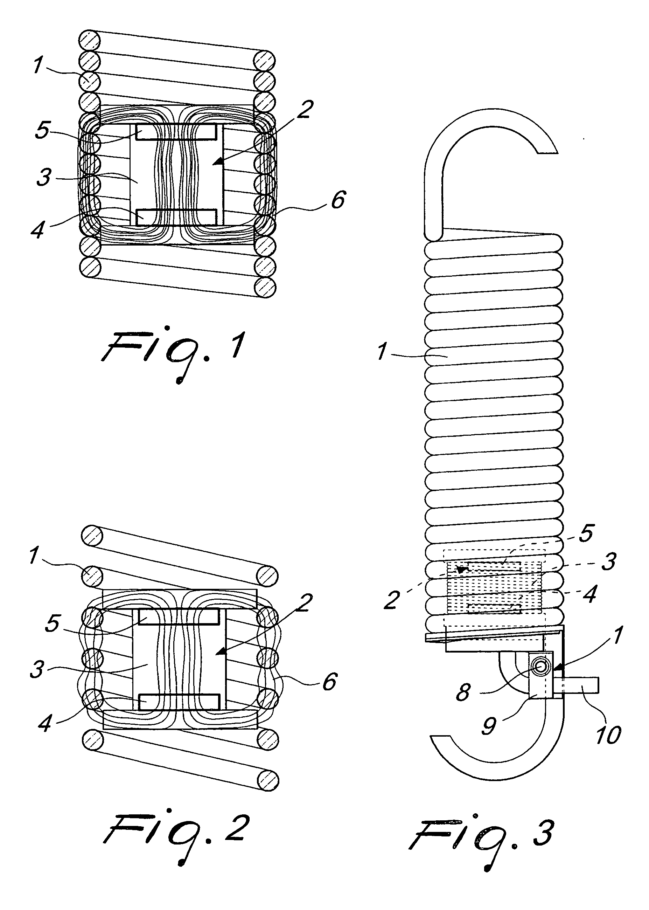

Advantageously, the magnetic field sensor 5 is constituted by a device which is crossed by a magnetic field, designated by the reference numeral 6 in Figures 1 and 2, and comprises an electrical characteristic which can vary depending on variations of the magnetic field 6.

In particular, the magnetic field sensor 5 is constituted by a magnetoresistive sensor or, as an alternative, by a Hall sensor.

The magnet 4 generates the magnetic field 6, which is arranged along certain lines of force.

In particular, the energy accumulated by the system through the magnetic field 6 tends naturally to the minimum, and for this reason the lines of the magnetic field 6 tend to be denser in the regions where there is material with higher permeability (i.e., the material of which the turns of the spring 1 are made), and to become more diffuse where the material is not present.

The operation of the measurement device 2 is therefore based on a direct measurement of the intensity of the magnetic field 6 which affects the turns of the spring 1.

In particular, the magnetic field 6 generated by the magnet 4 follows the path of minimum reluctance that passes through the supporting element 3, passes through the magnetic field sensor 5, and closes by passing through the turns of the spring 1.

When the spring 1 is inactive, the lines of magnetic field 6 generated by the magnet 4 that pass through the turns are closer, since the path through the material with high permeability is substantially continuous.

In this case, the magnetic circuit has the lowest reluctance, and accordingly the value of the intensity of the magnetic field 6 is highest.

Likewise, when the spring 1 is extended, the magnetic circuit comprises the air gaps between one turn and the next and therefore follows a path with higher reluctance, with a consequent decrease of the intensity of the magnetic field 6.

As shown in Figure 3, the measurement device 2 is connected to the spring 1 by way of fixing means, generally designated by the reference numeral 7.

The fixing means 7 comprise a screw 8, which can be tightened in order to fix a fixing element 9, connected to the supporting element 3, to one of the turns of the spring 1.

Figure 3 further illustrates the presence of connecting cable 10 in the case in which the magnet 4 is constituted by a solenoid which can be supplied with power externally.

The operation of the present invention is as follows.

As shown in Figure 1, if the spring 1 is inactive, the path of the magnetic field 6 generated by the magnet 4 affects the supporting element 3 and the closely spaced turns of the spring 1.

In this case, the reluctance of the path followed by the magnetic field 6 is lowest, since said magnetic path affects almost exclusively material of the ferromagnetic type; accordingly, the intensity of the magnetic field 6 measured by the magnetic field sensor 5 is highest.

If the spring 1 is in an expanded condition, as shown in Figure 2, the turns are mutually spaced and the magnetic field 6 passes through air gaps between one turn and the next.

The magnetic circuit thus constituted, therefore, does not comprise only ferromagnetic material, producing a higher reluctance than measured respectively in the inactive condition of the spring 1, with a consequent lower intensity of the magnetic field 6 measured by the magnetic field sensor 5.

In this manner, it is possible to trace the measurement made at different lengths of the spring 1 to variations of an output voltage or current signal of the magnetic field sensor 5.

In practice it has been found that the described method and device achieve the intended aim and objects, and in particular the fact is stressed that they allow to achieve an indirect measurement of the length variation of a spring on the basis of variations of the intensity of a magnetic field whose magnetic circuit comprises said spring.

In particular, the device allows to determine reliably the elongation or contraction of the spring with respect to a known static situation.

This entails that if the spring is applied to a machine so that it is subjected to a static load, the measurement device is capable of measuring length variations with respect to said static situation.

The method and the device thus conceived are susceptible of numerous modifications and variations, all of which are within the scope of the inventive concept.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. MO2005A000116 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for measuring the length variation of a spring (1), comprising the steps of:
providing a measurement device (2) that comprises: at least one magnet (4) for generating a magnetic field (6); at least one magnetic field sensor (5); and a supporting element (3) to which said at least one magnet (4) and said at least one magnetic field sensor (5) are fixed;
associating said measurement device (2) with a spring (1);
generating, by means of said at least one magnet (4), a magnetic field (6) such that said magnetic field (6) pass through turns of said spring (1);
determining a measurement of the intensity of said magnetic field (6) of said at least one magnet (4) of said measurement device (2);
on the basis of said measurement of the intensity of the magnetic field (6), determining the length variation of said spring (1);
the method being **characterized by** fixing said measurment device (2) to said spring (1) at a single point.

2. The method according to claim 1, **characterized in that** said magnet (4) is constituted by a permanent magnet.

3. The method according to one or more of the preceding claims, **characterized in that** said magnet (4) is constituted by an electromagnet which comprises a solenoid driven by means of an external current source.

4. The method according to one or more of the preceding claims, **characterized in that** said magnetic field sensor (5) is immersed within said magnetic field (6) generated by said magnet (4), said intensity of said magnetic field (6) depending on the length variation of said spring (1).

5. The method according to one or more of the preceding claims, **characterized in that** said magnetic field sensor (5) is a magnetoresistive sensor.

6. The method according to one or more of the preceding claims, **characterized in that** said magnetic field sensor (5) is a Hall sensor.

7. The method according to one or more of the preceding claims, **characterized in that** said measurement device (2) is arranged inside said spring (1).

8. The method according to one or more of the preceding claims, **characterized in that** said measurement device (2) is arranged outside said spring (1).

9. The method according to one or more of the preceding claims, **characterized in that** said supporting element (3) is made of ferromagnetic material, and said magnetic field (6) passes through said supporting element (3) and through said magnetic field sensor (5).

10. The method according to one or more of the preceding claims, **characterized in that** the distance between said at least one magnet (4) and said at least one magnetic field sensor (5) both fixed to said supporting element (3) remains constant when said spring (1) changes in length.

11. A spring (1) comprising a measurement device (2) which is suitable to allow detection of the variation of the length of said spring (1) with respect to an inactive condition, said measurement device (2) comprising at least one magnet (4), at least one magnetic field sensor (5), and a supporting element (3) to which said at least one magnet (4) and said at least one magnetic field sensor (5) are fixed such that said at least one magnet (4) generates a magnetic field (6) that pass through the turns of said spring (1) and through said magnetic field sensor (5) that detects the intensity of said magnetic field (6), said intensity depending on the length variation of said spring (1), **characterised in that** said measurement device (2) is fixed to said spring (1) at a single point.

12. The spring (1) according to claim 11, **characterized in that** it is made of a material whose magnetic permeability is significantly different from the magnetic permeability of vacuum.

13. The spring (1) according to claims 11 and 12, **characterized in that** it is made of ferromagnetic material.

14. The spring (1) according to claims 11 and 12, **characterized in that** it is made of diamagnetic material.

15. The spring (1) according to claims 11 and 12, **characterized in that** it is made of paramagnetic material.

16. The spring (1) according to one or more of claims 11 to 15, **characterized in that** said measurement device (2) is arranged inside said spring (1).

17. The spring (1) according to one or more of claims 11 to 16, **characterized in that** said measurement device (2) is arranged outside said spring (1).

18. The spring (1) according to one or more of claims 11 to 17, **characterized in that** said measurement device (2) is connected to a portion of a turn of said spring (1).

## Patentansprüche

1. Ein Verfahren zur Messung der Längenänderung einer Feder (1), das folgende Schritte umfasst:
Bereitstellung einer Messvorrichtung (2), die Folgendes umfasst: mindestens einen Magneten (4) zur Erzeugung eines Magnetfeldes (6), mindestens einen Magnetfeldsensor (5) und ein tragendes Element (3), an dem der mindestens eine Magnet (4) und der mindestens eine Magnetfeldsensor (5) befestigt sind,
Verbindung der Messvorrichtung (2) mit einer Feder (1),
Erzeugung, mit Hilfe des mindestens einen Magneten (4), eines Magnetfeldes (6), so dass das Magnetfeld (6) durch Wicklungen der Feder (1) verläuft,
Bestimmung einer Messung der Stärke des Magnetfelds (6) des mindestens einen Magneten (4) der Messvorrichtung (2),
anhand der Messung der Stärke des Magnetfeldes (6), Bestimmung der Längenänderung der Feder (1),
wobei das Verfahren **gekennzeichnet ist durch** die Befestigung der Messvorrichtung (2) an der Feder (1) an einem einzigen Punkt.

2. Das Verfahren gemäß Anspruch 1, **dadurch gekennzeichnet, dass** der Magnet (4) aus einem Dauermagneten gebildet ist.

3. Das Verfahren gemäß einem oder mehreren der obigen Ansprüche, **dadurch gekennzeichnet, dass** der Magnet (4) aus einem Elektromagneten gebildet ist, welcher eine Magnetspule umfasst, die mit Hilfe einer externen Stromquelle betrieben wird.

4. Das Verfahren gemäß einem oder mehreren der obigen Ansprüche, **dadurch gekennzeichnet, dass** der Magnetfeldsensor (5) in das von dem Magneten (4) erzeugte Magnetfeld (6) eingetaucht ist, wobei die Stärke des Magnetfeldes (6) von der Längenänderung der Feder (1) abhängt.

5. Das Verfahren gemäß einem oder mehreren der obigen Ansprüche, **dadurch gekennzeichnet, dass** der Magnetfeldsensor (5) ein Magnetwiderstandssensor ist.

6. Das Verfahren gemäß einem oder mehreren der obigen Ansprüche, **dadurch gekennzeichnet, dass** der Magnetfeldsensor (5) ein Hall-Sensor ist.

7. Das Verfahren gemäß einem oder mehreren der obigen Ansprüche, **dadurch gekennzeichnet, dass** die Messvorrichtung (2) innerhalb der Feder (1) angeordnet ist.

8. Das Verfahren gemäß einem oder mehreren der obigen Ansprüche, **dadurch gekennzeichnet, dass** die Messvorrichtung (2) außerhalb der Feder (1) angeordnet ist.

9. Das Verfahren gemäß einem oder mehreren der obigen Ansprüche, **dadurch gekennzeichnet, dass** das tragende Element (3) aus ferromagnetischem Material hergestellt ist und das Magnetfeld (6) durch das tragende Element (3) und durch den Magnetfeldsensor (5) verläuft.

10. Das Verfahren gemäß einem oder mehreren der obigen Ansprüche, **dadurch gekennzeichnet, dass** der Abstand zwischen dem mindestens einen Magneten (4) und dem mindestens einen Magnetfeldsensor (5), die beide an dem tragenden Element (3) befestigt sind, konstant bleibt, wenn sich die Länge der Feder (1) ändert.

11. Eine Feder (1), die eine Messvorrichtung (2) umfasst, welche geeignet ist, die Messung der Änderung der Länge der Feder (1) mit Bezug auf einen inaktiven Zustand zu ermöglichen,
wobei die Messvorrichtung (2) mindestens einen Magneten (4), mindestens einen Magnetfeldsensor (5) und ein tragendes Element (3) umfasst, an welchem der mindestens eine Magnet (4) und der mindestens eine Magnetfeldsensor (5) befestigt sind, so dass der mindestens eine Magnet (4) ein Magnetfeld (6) erzeugt, das durch die Wicklungen der Feder (1) und durch den Magnetfeldsensor (5) verläuft, der die Stärke des Magnetfeldes (6) misst, wobei die Stärke von der Längenänderung der Feder (1) abhängt, **dadurch gekennzeichnet, dass** die Messvorrichtung (2) an einem einzigen Punkt an der Feder (1) befestigt ist.

12. Die Feder (1) gemäß Anspruch 11, **dadurch gekennzeichnet, dass** sie aus einem Material hergestellt ist, dessen magnetische Durchlässigkeit sich signifikant von der magnetischen Durchlässigkeit von Vakuum unterscheidet.

13. Die Feder (1) gemäß den Ansprüchen 11 und 12, **dadurch gekennzeichnet, dass** sie aus ferromagnetischem Material hergestellt ist.

14. Die Feder (1) gemäß den Ansprüchen 11 und 12, **dadurch gekennzeichnet, dass** sie aus diamagnetischem Material hergestellt ist.

15. Die Feder (1) gemäß den Ansprüchen 11 und 12, **dadurch gekennzeichnet, dass** sie aus paramagnetischem Material hergestellt ist.

16. Die Feder (1) gemäß einem oder mehreren der Ansprüche 11 bis 15, **dadurch gekennzeichnet, dass** die Messvorrichtung (2) innerhalb der Feder (1) angeordnet ist.

17. Die Feder (1) gemäß einem oder mehreren der Ansprüche 11 bis 16, **dadurch gekennzeichnet, dass** die Messvorrichtung (2) außerhalb der Feder (1) angeordnet ist.

18. Die Feder (1) gemäß einem oder mehreren der Ansprüche 11 bis 17, **dadurch gekennzeichnet, dass** die Messvorrichtung (2) mit einem Abschnitt einer Wicklung der Feder (1) verbunden ist.

## Revendications

1. Procédé pour mesurer la variation de longueur d'un ressort (1), comprenant les étapes consistant à :
prévoir un dispositif de mesure (2) qui comprend :
au moins un aimant (4) pour générer un champ magnétique (6) ; au moins un capteur de champ magnétique (5) ; et un élément de support (3) auquel ledit au moins un aimant (4) et ledit au moins un capteur de champ magnétique (5) sont fixés ;
associer ledit dispositif de mesure (2) à un ressort (1) ;
générer, au moyen dudit au moins un aimant (4), un champ magnétique (6) de sorte que ledit champ magnétique (6) passe à travers les spires dudit ressort (1) ;
déterminer une mesure de l'intensité dudit champ magnétique (6) dudit au moins un aimant (4) dudit dispositif de mesure (2) ;
sur la base de ladite mesure de l'intensité du champ magnétique (6), déterminer la variation de longueur dudit ressort (1) ;
le procédé étant **caractérisé par** la fixation dudit dispositif de mesure (2) audit ressort (1) en un point unique.

2. Procédé selon la revendication 1, **caractérisé en ce que** ledit aimant (4) est constitué d'un aimant permanent.

3. Procédé selon une ou plusieurs des revendications précédentes, **caractérisé en ce que** ledit aimant (4) est constitué d'un électroaimant qui comprend un solénoïde commandé au moyen d'une source de courant externe.

4. Procédé selon une ou plusieurs des revendications précédentes, **caractérisé en ce que** ledit capteur de champ magnétique (5) est immergé dans ledit champ magnétique (6) généré par ledit aimant (4), ladite intensité dudit champ magnétique (6) dépendant de la variation de longueur dudit ressort (1).

5. Procédé selon une ou plusieurs des revendications précédentes, **caractérisé en ce que** ledit capteur de champ magnétique (5) est un capteur magnétorésistif.

6. Procédé selon une ou plusieurs des revendications précédentes, **caractérisé en ce que** ledit capteur de champ magnétique (5) est un capteur à effet Hall.

7. Procédé selon une ou plusieurs des revendications précédentes, **caractérisé en ce que** ledit dispositif de mesure (2) est agencé à l'intérieur dudit ressort (1).

8. Procédé selon une ou plusieurs des revendications précédentes, **caractérisé en ce que** ledit dispositif de mesure (2) est agencé à l'extérieur dudit ressort (1).

9. Procédé selon une ou plusieurs des revendications précédentes, **caractérisé en ce que** ledit élément de support (3) est constitué d'un matériau ferromagnétique, et ledit champ magnétique (6) passe à travers ledit élément de support (3) et à travers ledit capteur de champ magnétique (5).

10. Procédé selon une ou plusieurs des revendications précédentes, **caractérisé en ce que** la distance entre ledit au moins un aimant (4) et ledit au moins un capteur de champ magnétique (5) tous deux fixés audit élément de support (3) reste constante lorsque ledit ressort (1) change de longueur.

11. Ressort (1) comprenant un dispositif de mesure (2) qui est approprié pour permettre la détection de la variation de la longueur dudit ressort (1) par rapport à une condition inactive, ledit dispositif de mesure (2) comprenant au moins un aimant (4), au moins un capteur de champ magnétique (5), et un élément de support (3) auquel ledit au moins un aimant (4) et ledit au moins un capteur de champ magnétique (5) sont fixés de sorte que ledit au moins un aimant (4) génère un champ magnétique (6) qui passe à travers les spires dudit ressort (1) et à travers ledit capteur de champ magnétique (5) qui détecte l'intensité dudit champ magnétique (6), ladite intensité dépendant de la variation de longueur dudit ressort (1), **caractérisé en ce que** ledit dispositif de mesure (2) est fixé audit ressort (1) en un point unique.

12. Ressort (1) selon la revendication 11,
**caractérisé en ce qu'**il est constitué d'un matériau dont la perméabilité magnétique est sensiblement différente de la perméabilité magnétique du vide.

13. Ressort (1) selon les revendications 11 et 12, **caractérisé en ce qu'**il est constitué d'un matériau ferromagnétique.

14. Ressort (1) selon les revendications 11 et 12, **caractérisé en ce qu'**il est constitué d'un matériau diamagnétique.

15. Ressort (1) selon les revendications 11 et 12, **caractérisé en ce qu'**il est constitué d'un matériau paramagnétique.

16. Ressort (1) selon une ou plusieurs des revendications 11 à 15, **caractérisé en ce que** ledit dispositif de mesure (2) est agencé à l'intérieur dudit ressort (1).

17. Ressort (1) selon une ou plusieurs des revendications 11 à 16, **caractérisé en ce que** ledit dispositif de mesure (2) est agencé à l'extérieur dudit ressort (1).

18. Ressort (1) selon une ou plusieurs des revendications 11 à 17, **caractérisé en ce que** ledit dispositif de mesure (2) est connecté à une partie d'une spire dudit ressort (1).
